# EUROPEAN PATENT APPLICATION

(11) **EP 4 804 388 A1**
(43) Date of publication of application: **09.09.2026**
(21) Application number: 23957515.2
(22) Date of filing: 20.12.2023
(51) Int. Cl.: H02K 5/16, H02K 5/173, H02K 7/116, H02K 1/22, H02K 1/12, B25J 17/00, F16H 49/00

(54) **MOTOR INTEGRATED WITH WAVE GENERATOR, AND INTEGRATED JOINT**

(30) Priority: 03.11.2023 CN 202311457035
(71) Applicant: REALMAN ROBOT CO., LTD., Beijing 100080 (CN)
(72) Inventor: JI, Haoyu, Beijing 100043 (CN); LI, Qiang, Beijing 100043 (CN); ZHANG, Xulong, Beijing 100043 (CN)
(74) Representative: AURODION PartmbB
(86) International application number: PCT/CN2023/140186
(87) International publication number: WO 2025/091662

(57) **Abstract**

The present application relates to the technical field of robots, and particular to a motor integrated with a wave generator, and an integrated joint. The motor includes a motor stator (1), a motor rotor (2), rollers (3) and a roller connecting part (4), wherein the motor rotor (2) is sleeved on the periphery of the motor stator (1), and a gap is provided between the motor rotor (2) and the motor stator (1); the radial cross section of the motor rotor (2) is a cam-shaped cross section. The rollers (3) are arranged on the periphery of the motor rotor (2) by means of the roller connecting part (4); and the roller connecting part (4) and the motor rotor (2) are of an integrally-formed or separable structure. According to the present application, the motor and the wave generator are integrated in a sleeved manner, and the motor is integrated inside the wave generator, thereby reducing the size of a harmonic reducer and the motor from the axial direction; the motor rotor (2) is arranged outside the motor stator (1), the radial cross section of the motor rotor (2) is configured as the cam-shaped cross section of the wave generator, and a cam of the wave generator is integrated with the motor rotor (2), thereby reducing number of components, and minimizing the radial size; and the axial and radial sizes of the motor and the wave generator are integrally reduced, thereby achieving miniaturization.

## Description

### CROSS REFERENCE

The present disclosure is based on the Chinese patent application with application number 2023114570353 and application date of November 3, 2023, and claims the priority of the Chinese patent application. The entire content of the Chinese patent application is hereby introduced into this application as a reference.

### TECHNICAL FIELD

The present disclosure relates to the technical field of robots, and particular to a motor integrated with a wave generator, and an integrated joint.

### BACKGROUND ART

In recent years, humanoid robotic arms/robots and collaborative robots and the like have experienced rapid development. The high integration of joint module determines the robot's body size and adaptability to the worksite. A joint module integrates the reducer, motor, drive, encoder, controller, etc. How to improve manufacturing processes and minimize the volume of the joint module as much as possible while ensuring accuracy, torque, and power is a significant bottleneck.

Harmonic reducers have the characteristics of high transmission efficiency, compact size, light weight, stable transmission, and low noise, etc., and are widely used in robotics field, particularly in collaborative robotic arms and service robots. With the development of robotics technology, requirements for the size and accuracy of harmonic reducers are becoming increasingly stringent.

Traditional harmonic reducers consist of three main components: a wave generator, a flexspline, and a circular spline. An elliptical cam within the wave generator rotates within the flexspline, causing the flexspline to deform. When the teeth of the flexspline at both ends of the long axis of the wave generator's elliptical cam mesh with the teeth of the circular spline, the teeth of the flexspline at both ends of the short axis disengage from the teeth of the circular spline.

In the prior art, the motor and the wave generator are axially connected to provide power. Since the motor and the wave generator are discrete devices, the degree of miniaturization is limited and it is difficult to meet demands.

### SUMMARY

### (1) Purpose of the disclosure

The purpose of the present disclosure is to provide a motor integrated with a wave generator, and an integrated joint, which may reduce the axial dimensions of the motor and the wave generator.

### (2) Technical solution

To solve the above problems, the present disclosure provides a motor integrated with a wave generator, comprising: a motor stator, a motor rotor, rollers and a roller connecting part; the motor rotor is sleeved on the outer periphery of the motor stator, and a gap is provided between the motor rotor and the motor stator; the radial cross section of the motor rotor is a cam-shaped cross section; a plurality of rollers are arranged on the outer periphery of the motor rotor via the roller connecting part; the roller connecting part and the motor rotor are of an integrally-formed or separable structure.

In another aspect of the present disclosure, preferably, when the roller connecting part and the motor rotor are of a separable structure, the motor further comprises a connecting frame, which is also arranged on the outer periphery of the motor rotor and is situated between the rollers and the motor rotor.

In another aspect of the present disclosure, preferably, the connecting frame is provided with openings in the circumferential direction.

In another aspect of the present disclosure, preferably, the connecting frame is made of a flexible material.

In another aspect of the present disclosure, preferably, the rollers are configured as cylindrical rollers or balls.

In another aspect of the present disclosure, preferably, when the rollers are configured as cylindrical rollers, the roller connecting part is configured as a rectangular body with concave arc-shaped surface for contact with the rollers; when the rollers are configured as balls, the roller connecting part is configured as a retainer structure.

In another aspect of the present disclosure, preferably, an integrated joint includes at least one motor integrated with a wave generator as described above.

In another aspect of the present disclosure, preferably, it further comprises a shaft, a flexspline, a circular spline set, a first bearing and a second bearing; the motor is sleeved on the outer periphery of the shaft; the flexspline is sleeved on the outer periphery of the rollers; the circular spline set is sleeved on the outer periphery of the flexspline, and the outer periphery of the flexspline is in transmission connection with the inner periphery of the circular spline set; the two ends of the motor rotor are rotatably connected to the circular spline set via the first bearing and the second bearing respectively.

In another aspect of the present disclosure, preferably, it further comprises a third bearing, the shaft includes a first shaft portion and a second shaft portion connected to each other, the first shaft portion has a flange structure, the first shaft portion is rotatably connected to the circular spline set via the third bearing, and the motor is sleeved on the outer periphery of the second shaft portion.

In another aspect of the present disclosure, preferably, the integrated joint further comprises a driver module, wherein the driver module is sleeved on the second shaft portion and has a gap with the motor.

### (3) Beneficial effects

The above technical solution of the present disclosure has the following beneficial technical effects as follows.

The present disclosure integrates the motor and wave generator through a sleeved manner. On the one hand, since the motor is integrated inside the wave generator, the axial dimension is reduced approximately half compared to conventional designs. On the other hand, since the motor rotor of the present disclosure is positioned outside the motor stator, the radial cross section of the motor rotor is configured as a cam-shaped cross section of the wave generator, integrating the wave generator's cam with the motor rotor reduces the number of components and reduces the radial dimension. Consequently, the present disclosure reduces both the axial and radial dimensions of the motor and wave generator, achieving miniaturization.

### BRIEF DESCRIPTION OF THE DRAWINGS

FIG1 is a front view of motor integrated with a wave generator according to an embodiment of the present disclosure.
FIG2 is a bottom view of motor integrated with a wave generator according to an embodiment of the present disclosure.

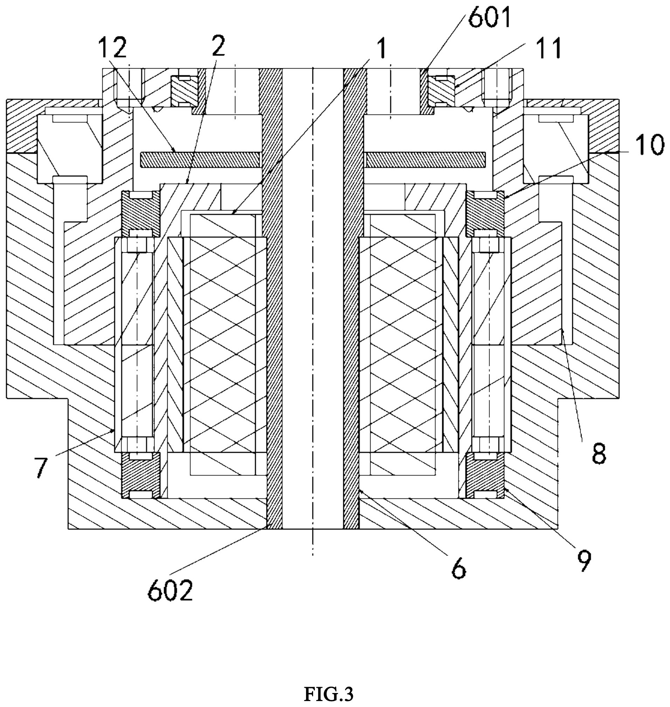

FIG3 is a cross-sectional view of an integrated joint according to an embodiment of the present disclosure.

### Reference symbols:

1: motor stator; 2: motor rotor; 3: roller; 4: roller connecting part; 5: connecting frame; 6: shaft; 7: flexspline; 8: circular spline set; 9: first bearing; 10: second bearing; 11: third bearing; 12: driver module; 601: first shaft portion; 602: second shaft portion.

### DETAILED DESCRIPTION OF EXEMPLARY EMBODIMENTS

To make the objectives, technical solutions, and advantages of the present disclosure more clearly understood, the present disclosure will be further described in detail below in conjunction with specific embodiments and with reference to the accompanying drawings. It should be understood that the description is merely exemplary and is not intended to limit the scope of the present disclosure. In addition, in the following description, descriptions of well-known structures and technologies are omitted to avoid unnecessary confusion of the concepts of the present disclosure.

The accompanying drawings illustrate schematic diagrams of layer structures according to embodiments of the present disclosure. These accompanying drawings are not drawn to scale; for clarity, some details are exaggerated and some details may be omitted. The shapes of the various regions and layers shown in the figure, as well as their relative sizes and positions are merely illustrative, and may deviate in practice due to manufacturing tolerances or technical limitations. Those skilled in the art may design regions/layers with different shapes, sizes, and relative positions based on actual needs.

Obviously, the described embodiments are only some embodiments of the present disclosure, not all embodiments. Based on the embodiments of the present disclosure, all other embodiments obtained by a person of ordinary skill in the art in this field without making creative efforts fall within the protection scope of the present disclosure.

In the description of the present disclosure, it should be noted that the terms "first", "second" and "third" are only used for descriptive purposes and should not be understood as indicating or implying relative importance.

In addition, the technical features involved in the different embodiments of the present disclosure described below may be combined with each other as long as they do not conflict with each other.

The present disclosure will be described in more detail below with reference to the accompanying drawings. In each of the accompanying drawings, identical elements are represented by similar reference symbols. For the sake of clarity, the various parts in the accompanying drawings are not drawn to scale.

### Embodiment 1

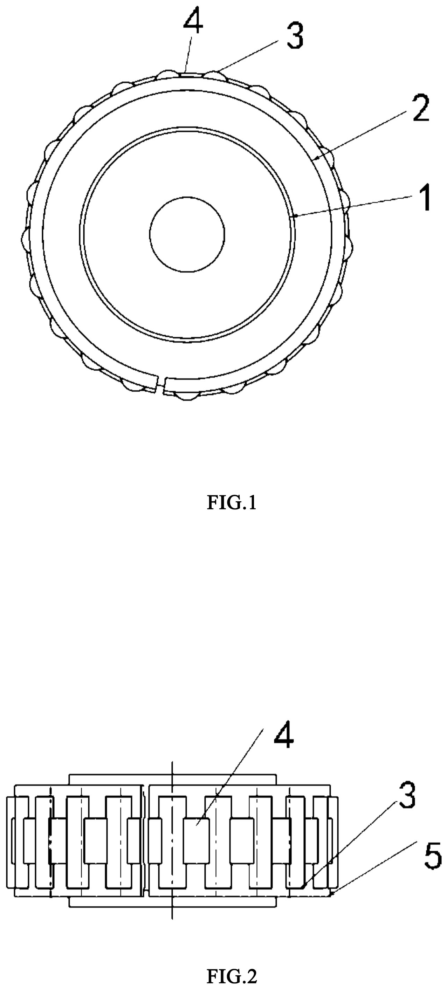

A motor integrated with a wave generator. FIG1 shows a front view of the motor integrated with a wave generator according to one embodiment of the present disclosure. The wave generator and the motor are driven via bearings. The motor's outer rotor drives the bearings to engage with gears, achieving deceleration. FIG2 shows a bottom view of the motor integrated with a wave generator according to one embodiment of the present disclosure. As shown in FIG1 and FIG2, the motor integrated with a wave generator includes: a motor stator 1, a motor rotor 2, rollers 3, and a roller connecting part 4.

The motor stator is an important component of motors such as generators and starters. The motor stator is a key part of the electric motor. The motor stator includes three parts: a stator core, stator windings, and a frame. The primary function of the stator is to generate a rotating magnetic field. The specific structure, size, model, etc. of the motor stator are not limited here. The primary function of the motor rotor is to be cut by the magnetic field lines in the rotating magnetic field to generate torque. The specific structure, size, model, etc. of the motor rotor are not limited here.

The specific structure of the rollers 3 are not limited here, nor are the specific material of the rollers 3. Optionally, in this embodiment, the rollers 3 are made of a metal material. Further, optionally, the rollers 3 may be configured as cylindrical rollers or balls. The specific structure of the cylindrical rollers, the axial dimension of the cylindrical rollers, and the cross-sectional diameter of the cylindrical rollers are not limited here. The rollers 3 may also be configured as ball structures, and the specific size of the balls are not limited.

The motor rotor 2 is sleeved on the outer periphery of the motor stator 1, and a gap is formed between the motor rotor 2 and the motor stator 1. The specific content of the gap between the motor rotor 2 and the motor stator 1 is not limited here. Optionally, the gap may be set according to the model and specification of the motor rotor 2 and the motor stator 1.

The radial cross section of the motor rotor 2 is a cam-shaped cross section; the cam here is a cam in the wave generator of harmonic reducer. Traditional harmonic reducer includes three major components: a wave generator, a flexspline, and a circular spline. By fixing any one of these components, with one of the remaining two active and the other passive, speed reduction or acceleration may be achieved, i.e., a fixed transmission ratio. Alternatively, a differential transmission with two inputs and one output may be employed. If the circular spline is fixed, with the wave generator as the active component and the flexspline as the passive component, the elliptical cam within the wave generator rotates within the flexspline, causing the flexspline to deform. Given the elliptical shape of the wave generator's cam, when the teeth of the flexspline at both ends of the long axis of the elliptical cam mesh with the teeth of the circular spline, the teeth of the flexspline at both ends of the short axis disengage from the teeth of the circular spline. For the teeth between the long axis and short axis of the wave generator, those in different sections along the circumference of the flexspline and the circular spline are in a partially meshed state of gradually entering into meshing, which is called meshing in, a partially meshed state of gradually exiting meshing is called meshing out. The continuous rotation of the wave generator causes the four movements of mesh in, meshing, meshing out, and disengagement to continuously change their respective working states. This movement is called staggered teeth motion, which converts input rotation into output motion. The radial cross section of the motor rotor 2 is a cam-shaped cross section, integrating the motor rotor and cam. This reduces the number of components, reduces weight, and reduces the radial and axial dimensions of the motor and wave generator, achieving the purpose of lightweighting and miniaturization.

The plurality of the rollers 3 are arranged on the outer periphery of the motor rotor 2 via a roller connecting part 4. The wave generator includes a cam and a flexible bearing, and arranging the rollers 3 on the outer periphery of the motor rotor 2 via the roller connecting part 4 is equivalent to a flexible bearing, which reduces some parts of the flexible bearing and achieves the purpose of lightweighting and miniaturization. The specific structure of the roller connecting part 4 is not limited here, or is it limited to the specific number of the rollers 3, nor is it limited whether the rollers 3 are evenly distributed on the outer periphery of the motor rotor 2, nor is it limited to the arrangement of the rollers 3 in the axial direction of the motor rotor 2. Optionally, the rollers 3 in the axial direction of the motor rotor 2 may be less than or equal to the axial dimension of the motor rotor 2, or the rollers 3 in the axial direction of the motor rotor 2 may be larger than the axial dimension of the motor rotor 2. When the rollers 3 in the axial direction of the motor rotor 2 are less than the axial dimension of the motor rotor 2, they may be exactly arranged in the middle of the axial direction of the motor rotor 2 or may be arranged biased to one side.

The roller connecting part 4 and the motor rotor 2 are of an integrally-formed or separable structure. The specific structure of the roller connecting part 4 is not limited herein. Optionally, it may extend through both ends of the rollers and be fixed to the outer periphery of the motor rotor, directly fixed to both ends of the motor rotor, or sleeved on the portion of the rollers close to the outer periphery of the motor rotor. Those skilled in the art will understand that any configuration is acceptable as long as a connection is achieved and the rollers may rotate about its own axis.

In this embodiment, the motor and wave generator are integrated through a sleeved manner. On the one hand, since the motor is integrated inside the wave generator, the axial dimension is reduced approximately by half compared with the conventional designs. On the other hand, since the motor rotor of the present disclosure is positioned outside the motor stator, the radial cross section of the motor rotor is configured as a cam-shaped cross section of the wave generator, integrating the cam of the wave generator with the motor rotor reduces the number of components and reduces the radial dimension. Consequently, the embodiment reduces both the axial and radial dimensions of the motor and wave generator, achieving miniaturization.

In one embodiment of the present disclosure, further, when the roller connecting part 4 and the motor rotor 2 are of a separable structure, the motor also includes connecting frame 5, which is also arranged on the outer periphery of the motor rotor 2 and located between the rollers 3 and the motor rotor 2. The setting of the connecting frame may limit the rollers to prevent the rollers from forming relative displacement with the outer contour of the motor rotor. The specific structure of the connecting frame 5 is not limited herein. Optionally, in one embodiment of the present disclosure, further, the connecting frame 5 is further provided with openings in the circumference. The provision of openings may adapt to the cam-shaped structure of the motor rotor, which simplifies the manufacturing process and reduces the manufacturing cost. The specific structure of the opening is not limited herein. Optionally, the center line of the opening may be parallel to the axis of the motor rotor, or it may be non-parallel. Optionally, in this embodiment, the center line of the opening is parallel to the axis of the motor rotor. In one embodiment of the present disclosure, further, the material of the connecting frame 5 is rigid material or flexible material, and different materials may be selected according to different scenarios. Rigid materials have high strength, good wear resistance and long service life. The specific content of the rigid material is not limited herein, and it may be carbon steel, alloy steel, or the like. The connection method between the connecting frame 5 and the motor rotor when the material of the connecting frame 5 is rigid material is not limited herein. The connection method is optional, and it may be screwed, clamped, welded or directly sleeved, and connected by friction. The connection method of the connecting frame 5 with the roller connecting part when the material of the connecting frame 5 is rigid material is not limited here. The connection method is optional, and it can be screwed, clamped, welded or directly sleeved, and connected by friction. The flexible material may better adapt to the outer contour of the motor rotor. The specific content of the flexible material is not limited herein, and it may be rubber material, felt, fiber, or the like. Optionally, in this embodiment, the material of the connecting frame 5 is nylon material. The connection method of the connecting frame 5 and the outer periphery of the motor rotor is not limited herein. Optionally, it may be adhesive bonding, or connected by frictional connection through the roller connecting part 4 and the rollers 3. The connection method of the roller connecting part 4 and the connecting frame 5 is not limited here, and it may be glued or connected by friction, etc. By setting the connecting frame, the rollers may better adapt to the cam-shaped outer contour of the motor rotor, reduce the process difficulty, and reduce the manufacturing cost.

In one embodiment of the present disclosure, further, the rollers 3 are configured as cylindrical rollers or balls. As shown in FIG1, when the rollers 3 are configured as cylindrical rollers, the roller connecting part 4 is configured as a rectangular body with concave arc-shaped surface for contact with the rollers. The specific structures of the rectangular bodies are not limited herein. It may be the same as or different from the axial length of the cylindrical rollers. Optionally, in this embodiment, the length of the rectangular bodies is less than the axial length of the cylindrical rollers. There is no limit herein on the extent to which the rectangular bodies wrap around the cylindrical rollers. Those skilled in the art will understand that any configuration that may achieve fixation without affecting the rotation of the cylindrical rollers is acceptable. When the rollers 3 are configured as balls, the roller connecting part 4 is configured as a retainer structure. The retainer structure is a retainer structure in bearing that may fix the balls without affecting their rotation.

The motor integrated with a wave generator in this embodiment may be placed directly in the flexspline. During operation, the motor rotor rotates around its axis. Since its outer contour is equivalent to that of a wave generator, it may directly act on the flexspline, achieving differential rotation between the flexspline and the external circular spline. At the same time, since cylindrical rollers are already installed on the outside of the motor rotor, the flexible bearings of the traditional harmonic reducer may be omitted. This embodiment integrates the traditional wave generator cam and flexible bearings into the motor rotor. Compared with existing integration solutions, the axial and radial volume of the joint is greatly reduced, achieving the purpose of miniaturization and lightweighting of the harmonic reducer and integrated joint.

### Embodiment 2

An integrated joint includes at least one motor integrated with a wave generator as described above. Further, the integrated joint also includes a shaft 6, a flexspline 7, a circular spline set 8, a first bearing 9 and a second bearing 10. The flexspline 7 and the circular spline set 8 are parts of harmonic reducer. The motor is sleeved on the outer periphery of the shaft 6. The flexspline 7 is sleeved on the outer periphery of the rollers 3. The circular spline set 8 is sleeved on the outer periphery of the flexspline 7, and the outer periphery of the flexspline 7 is in transmission connection with the inner periphery of the circular spline set 8.

The specific structure of the flexspline 7 is not limited herein, and it may be a cylindrical structure, a through-hole structure, or a necking flexspline. The wall thickness of the flexspline is not specifically limited herein. It may have uniform thickness, or may have one end thicker and the other end thinner. In this embodiment, the circular spline set 8 includes a first circular spline and a second circular spline, and the first circular spline and the second circular spline are annular structures. The first circular spline and the second circular spline form an annular receiving cavity. The radial relationship between the first circular spline and the second circular spline is not limited here, nor is the axial relationship between the two. Optionally, the first circular spline and the second circular spline have the same radial length, and the first circular spline and the second circular spline have the same axial length. The first circular spline and the second circular spline are connected. The connection structure between the two is not limited herein. It may be a cross roller bearing structure, or it may be connected via a bearing, or the connection structure may be one where the first circular spline is provided with a first V-shaped ring groove, and the second circular spline is provided with a second V-shaped ring groove, which cooperate with the first V-shaped ring groove to form a rectangular ring groove structure for connection.

The outer periphery of the flexspline 7 is in transmission connection with the inner periphery of the circular spline set 8. Here, flexspline transmission teeth are provided at one end of the outer periphery of the flexspline 7. The inner wall of the first circular spline or the second circular spline in the circular spline set 8 is provided with circular spline transmission teeth. The number of the flexspline transmission teeth is different from that of the circular spline transmission teeth to form a teeth difference, thereby achieving the transmission. Furthermore, flexspline fixed teeth are provided at the other end of the outer periphery of the flexspline 7. Correspondingly, the inner wall of the second circular spline or the first circular spline in the circular spline set 8 is provided with circular spline fixed teeth. The number of the flexspline fixed teeth is the same as that of the circular spline fixed teeth, which has a fixing effect therebetween to prevent the flexspline from moving.

The two ends of the motor rotor 2 are rotatably connected to the circular spline set 8 via the first bearing 9 and the second bearing 10. The two bearings are connected to the two ends of the motor shaft and may limit the flexspline in the middle of the motor shaft to prevent it from moving in the axial direction.

This embodiment achieves the reduction of the axial and radial dimensions of the integrated joint. The axial dimension is reduced by the axial dimension of one motor, and the motor housing components are also eliminated. Compared with traditional designs the number of structural parts is reduced, the structural weight is lowered, and the structure is simpler. The diameter of the integrated joint of this structure is the diameter of the circular spline set.

In one embodiment of the present disclosure, further, the integrated joint also includes a third bearing 11, the shaft 6 includes a first shaft portion 601 and a second shaft portion 602 connected to each other, the first shaft portion 601 has a flange structure, the first shaft portion 601 is rotatably connected to the circular spline set 8 via a third bearing 11, and the motor is sleeved on the outer periphery of the second shaft portion 602.

Furthermore, the integrated joint further includes a driver module 12, which is mounted on the second shaft portion 602 and has a gap with the motor. The size of the gap is not limited herein. The gap is to prevent electromagnetic interference and to leave clearance for the motor to move. Furthermore, a gap is also provided between the driver module 12 and the flange structure of the first shaft portion 601 to prevent interference. Integrating the driver module 12 into the circular spline set fully realizes component reuse and greatly reduces the axial length and radial dimension of the joint.

In the integrated joint of this embodiment, both of the motor and the driver module are integrated into the circular spline set and the motor is integrated with the wave generator, thereby reducing the axial dimension of the motor. Since the motor is integrated into the harmonic reducer, components of the motor housing is omitted, and the motor rotor is integrated with the cam into one component, which further reduces the number of components and achieves miniaturization and lightweight.

It should be understood that above-described specific embodiments of the present disclosure are provided only for the purpose of illustrating or explaining the principles of the present disclosure and do not constitute limitations on the present disclosure. Therefore, any modifications, equivalent substitutions, improvements, etc. made without departing from the spirit and scope of the present disclosure shall be included within the protection scope of the present disclosure. Furthermore, the appended claims of the present disclosure are intended to cover all variations and modifications falling within the scope and boundary of the appended claims, or within the equivalents thereof.

In above description, technical details such as the patterning and etching of each layer have not been described in detail. However, those skilled in the art will understand that various means available in the prior art may be used to form layers, regions, and the like in the desired shapes. Furthermore, to form the same structure, those skilled in the art may devise methods that are not entirely identical to those described above.

The present disclosure has been described above with reference to the embodiments thereof. However, these embodiments are for illustrative purposes only and are not intended to limit the scope of the present disclosure. The scope of the present disclosure is defined by the appended claims and their equivalents. Those skilled in the art may make various substitutions and modifications without departing from the scope of the present disclosure, and such substitutions and modifications are intended to fall within the scope of the present disclosure.

Although the embodiments of the present disclosure have been described in detail, it should be understood that various changes, substitutions, and alterations could be made hereto without departing from the spirit and scope of the disclosure.

Obviously, the above embodiments are merely examples for clarity of explanation and are not intended to limit the implementation methods. Those skilled in the art may make various modifications or alterations based on the above description. It is neither necessary nor possible to list all possible embodiments here. Any obvious modifications or alterations derived therefrom remain within the scope of protection of the present disclosure.

## Claims

1. A motor integrated with a wave generator, **characterized in that**,
a motor stator (1), a motor rotor (2), rollers (3) and a roller connecting part (4);
the motor rotor (2) is sleeved on the outer periphery of the motor stator (1), and a gap is provided between the motor rotor (2) and the motor stator (1);
the radial cross section of the motor rotor (2) is a cam-shaped cross section;
a plurality of rollers (3) are arranged on the outer periphery of the motor rotor (2) via the roller connecting part (4);
the roller connecting part (4) and the motor rotor (2) are of an integrally -formed or separable structure.

2. The motor integrated with a wave generator according to claim 1, **characterized in that**,
when the roller connecting part (4) and the motor rotor (2) are of a separable structure, the motor further comprises a connecting frame (5), which is also arranged on the outer periphery of the motor rotor (2) and is situated between the rollers (3) and the motor rotor (2).

3. The motor integrated with a wave generator according to claim 2, **characterized in that**,
the connecting frame (5) is provided with openings in the circumferential direction.

4. The motor integrated with a wave generator according to claim 2, **characterized in that**,
the connecting frame (5) is made of a flexible material.

5. The motor integrated with a wave generator according to claim 1, **characterized in that**,
the rollers (3) are configured as cylindrical rollers or balls.

6. The motor integrated with a wave generator according to claim 5, **characterized in that**,
when the rollers (3) are configured as cylindrical rollers, the roller connecting part (4) is configured as a rectangular body with concave arc-shaped surface for contact with the rollers;
when the rollers (3) are configured as balls, the roller connecting part (4) is configured as a retainer structure.

7. An integrated joint, **characterized in that**,
at least one motor integrated with a wave generator according to any one of claims 1 to 6.

8. The integrated joint according to claim 7, **characterized in that**,
it further comprises a shaft (6), a flexspline (7), a circular spline set (8), a first bearing (9) and a second bearing (10);
the motor is sleeved on the outer periphery of the shaft (6);
the flexspline (7) is sleeved on the outer periphery of the rollers (3);
the circular spline set (8) is sleeved on the outer periphery of the flexspline (7), and the outer periphery of the flexspline (7) is in transmission connection with the inner periphery of the circular spline set (8);
the two ends of the motor rotor (2) are rotatably connected to the circular spline set (8) via the first bearing (9) and the second bearing (10) respectively.

9. The integrated joint according to claim 8, **characterized in that**,
it further comprises a third bearing (11), the shaft (6) comprises a first shaft portion (601) and a second shaft portion (602) connected to each other, the first shaft portion (601) has a flange structure, the first shaft portion (601) is rotatably connected to the circular spline set (8) via the third bearing (11), and the motor is sleeved on the outer periphery of the second shaft portion (602).

10. The integrated joint according to claim 9, **characterized in that**,
it further comprises a driver module (12), wherein the driver module (12) is sleeved on the second shaft portion (602) and has a gap from the motor.
